# EUROPEAN PATENT APPLICATION

(11) **EP 4 614 841 A1**
(43) Date of publication of application: **10.09.2025**
(21) Application number: 23886375.7
(22) Date of filing: 03.11.2023
(51) Int. Cl.: H04B 17/20, H04W 74/08, H04W 8/24, H04W 72/51, H04W 72/04

(54) **MAXIMUM SENSITIVITY DEGRADATION-RELATED CAPABILITY**

(30) Priority: 04.11.2022 US 202263422455 P
(71) Applicant: LG Electronics Inc., Yeongdeungpo-gu Seoul 07336 (KR)
(72) Inventor: NA, Yunsik, Seoul 06772 (KR); HWANG, Jinyup, Seoul 06772 (KR); YANG, Yoonoh, Seoul 06772 (KR); LEE, Sangwook, Seoul 06772 (KR); HUH, Joongkwan, Seoul 06772 (KR); PARK, Jinwoong, Seoul 06772 (KR)
(74) Representative: Frenkel, Matthias Alexander
(86) International application number: PCT/KR2023/017534
(87) International publication number: WO 2024/096681

(57) **Abstract**

A disclosure of the present specification provides a UE. The UE comprises: one or more transceivers; one or more processors; and one or more memories that store instructions and may be operatively connected to the one or more processors, wherein an operation performed on the basis that the instructions are executed by the one or more processors may comprise the steps of: transmitting a random access preamble to a base station; receiving, from the base station, a response to the random access preamble; transmitting, to the base station, information related to lower MSD; receiving a downlink signal; and transmitting an uplink signal.

## Description

### TECHNICAL FIELD

The present disclosure relates to a radio communication.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 110 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

To relax a reference sensitivity, Maximum sensitivity degradation (MSD) value can be defined. As the performance of the user equipment (UE) improves, there is a problem that the previously defined MSD value is too large. Due to the excessively large MSD value, there is a problem that communication is performed inefficiently.

### DISCLOSURE

### TECHNICAL SOLUTION

In one aspect, a UE is provided. The UE includes one or more transceivers; one or more processors; and one or more memories that store instructions and can be connected to operate with the one or more processors. The operation performed based on the instructions being executed by the one or more processors may include: of transmitting a random access preamble to a base station; receiving a response to the random access preamble from the base station; transmitting information related to the lower MSD to the base station; receiving a downlink signal; and transmitting an uplink signal.

In another aspect, a method is provided in which the device performs.

In one aspect, the method for performing communication by a base station is provided. The method may include receiving a random access preamble from a UE; transmitting a response to the random access preamble to the UE; receiving information related to a lower MSD from the UE; and scheduling the UE based on the information related to the lower MSD; transmitting a downlink signal to the UE; and the step of receiving an uplink signal from the UE.

In another aspect, a device implementing the above method is provided.

### BRIEF DESCRIPTION OF THE DRAWINGS

FIG. 1 shows an example of a communication system to which implementation of the present disclosure is applied.
FIG. 2 shows an example of a wireless device to which implementation of the present disclosure is applied.
FIG. 3 shows an example of a wireless device to which implementation of the present disclosure is applied.
FIG. 4 shows an example of a radio frame structure of NR to which implementation of the present disclosure is applied.
FIG. 5 shows an example of a slot structure of an NR frame to which implementation of the present disclosure is applied.
Fig. 6a illustrates a concept view of an example of intra-band contiguous CA. Fig. 6b illustrates a concept view of an example of intra-band non-contiguous CA.
Fig. 7a illustrates a concept view of an example of a combination of a lower frequency band and a higher frequency band for inter-band CA. Fig. 7b illustrates a concept view of an example of a combination of similar frequency bands for inter-band CA.
FIGS. 8a to 8c are diagrams illustrating exemplary architecture for a next-generation mobile communication service.
FIGS. 9a to 9e are examples of RACH procedures applicable to one embodiment of the disclosure.
FIG. 10 illustrates an example of situation in which an uplink signal transmitted via an uplink operating band affects reception of a downlink signal on via downlink operating band.
FIG. 11 shows an example of the procedure according to the example of the present disclosure.
FIG. 12 shows an example of UE operation according to the start of the present disclosure.

### DETAILED DESCRIPTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, Band C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

Although a user equipment (UE) is illustrated by way of example in the accompanying drawings, the illustrated UE may be referred to as a terminal, mobile equipment (ME), and the like. In addition, the UE may be a portable device such as a notebook computer, a mobile phone, a PDA, a smartphone, and a multimedia device or may be a non-portable device such as a PC or a vehicle-mounted device.

Hereinafter, a UE is used as an example of a wireless communication device (or a wireless device or wireless equipment) capable of wireless communication. An operation performed by a UE may be performed by a wireless communication device. A wireless communication device may also be referred to as a wireless device, wireless equipment, or the like. Hereinafter, AMF may mean an AMF node, SMF may mean an SMF node, and UPF may mean a UPF node.

A base station used below generally refers to a fixed station communicating with a wireless device and may also be referred as an evolved-NodeB (eNodeB), an evolved-NodeB (eNB), a base transceiver system (BTS), an access point, and a next generation NodeB (gNB).

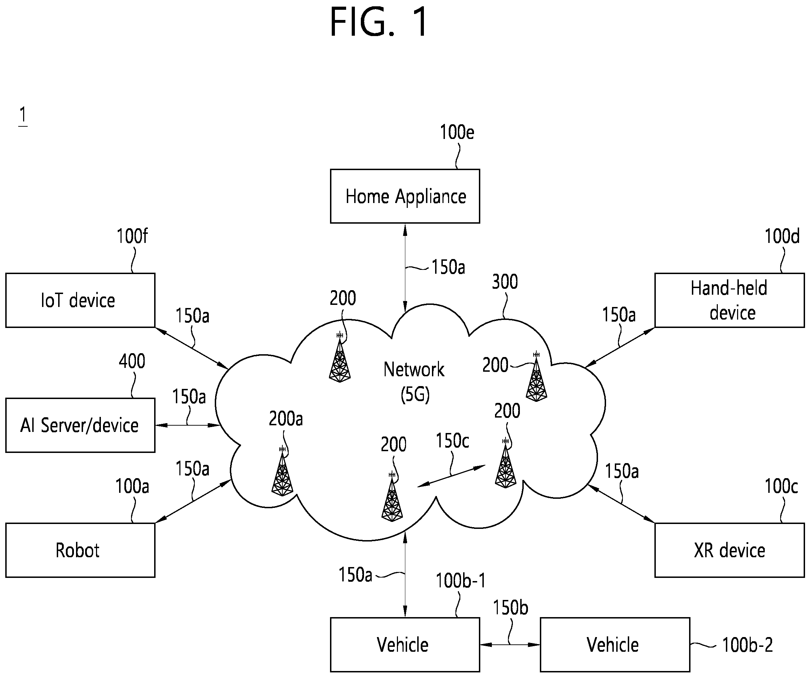

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of-things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with reconstructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW). FR2 may include FR 2-1 and FR 2-2, as shown in the examples in Table 1 and Table 2.

**[Table 1]**

| Frequency Range designation | | Corresponding frequency range | Subcarrier Spacing |
|---|---|---|---|
| FR1 | | 450MHz - 6000MHz | 15, 30, 60kHz |
| FR2 | FR2-1 | 24250MHz - 52600MHz | 60, 120, 240kHz |
| | FR2-2 | 57000MHz - 71000MHz | 120, 480, 960kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | | Corresponding frequency range | Subcarrier Spacing |
|---|---|---|---|
| FR1 | | 410MHz - 7125MHz | 15, 30, 60kHz |
| FR2 | FR2-1 | 24250MHz - 52600MHz | 60, 120, 240kHz |
| | FR2-2 | 57000MHz - 71000MHz | 120, 480, 960kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

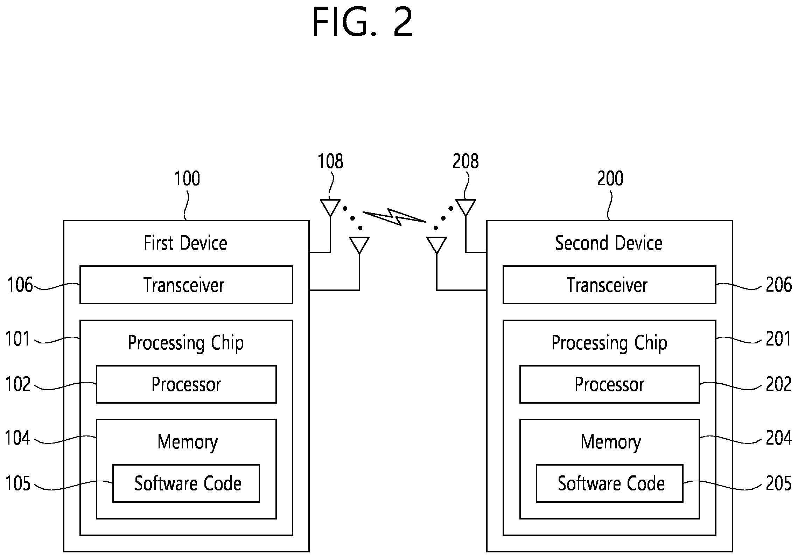

FIG. 2 shows an example of wireless devices to which implementations of the present disclosure is applied.

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

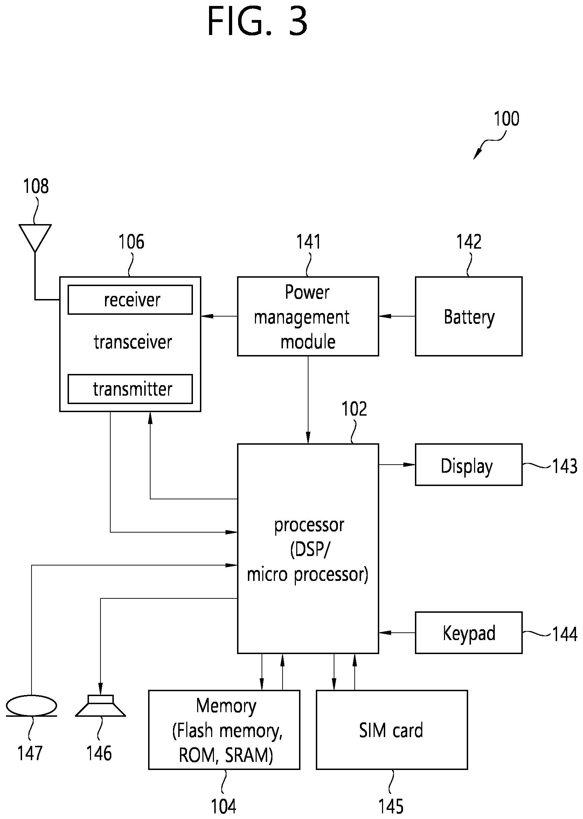

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

### <Operating bands of NR>.

The operating bands in NR are as follows

The operating bands in Table 3 below are the refarmed operating bands from the operating bands of LTE/LTE-A. This is referred to as the FR1 band.

**[Table 3]**

| NR operating bands | Uplink (UL) operating band | Downlink(DL) operating band | Duplex Mode |
|---|---|---|---|
| | F_{UL_low} - F_{UL_high} | F_{DL_low} - F_{DL_high} | |
| n1 | 1920 MHz - 1980 MHz | 2110 MHz - 2170 MHz | FDD |
| n2 | 1850 MHz - 1910 MHz | 1930 MHz - 1990 MHz | FDD |
| n3 | 1710 MHz - 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz - 2690 MHz | FDD |
| n8 | 880 MHz - 915 MHz | 925 MHz - 960 MHz | FDD |
| n12 | 699 MHz - 716 MHz | 729 MHz - 746 MHz | FDD |
| n20 | 832 MHz - 862 MHz | 791 MHz - 821 MHz | FDD |
| n25 | 1850 MHz - 1915 MHz | 1930 MHz - 1995 MHz | FDD |
| n28 | 703 MHz - 748 MHz | 758 MHz - 803 MHz | FDD |
| n34 | 2010 MHz - 2025 MHz | 2010 MHz - 2025 MHz | TDD |
| n38 | 2570 MHz - 2620 MHz | 2570 MHz - 2620 MHz | TDD |
| n39 | 1880 MHz - 1920 MHz | 1880 MHz - 1920 MHz | TDD |
| n40 | 2300 MHz - 2400 MHz | 2300 MHz - 2400 MHz | TDD |
| n41 | 2496 MHz - 2690 MHz | 2496 MHz - 2690 MHz | TDD |
| n50 | 1432 MHz - 1517 MHz | 1432 MHz - 1517 MHz | TDD1 |
| n51 | 1427 MHz - 1432 MHz | 1427 MHz - 1432 MHz | TDD |
| n66 | 1710 MHz - 1780 MHz | 2110 MHz - 2200 MHz | FDD |
| n70 | 1695 MHz - 1710 MHz | 1995 MHz - 2020 MHz | FDD |
| n71 | 663 MHz - 698 MHz | 617 MHz - 652 MHz | FDD |
| n74 | 1427 MHz - 1470 MHz | 1475 MHz - 1518 MHz | FDD |
| n75 | N/A | 1432 MHz - 1517 MHz | SDL |
| n76 | N/A | 1427 MHz - 1432 MHz | SDL |
| n77 | 3300 MHz - 4200 MHz | 3300 MHz - 4200 MHz | TDD |
| n78 | 3300 MHz - 3800 MHz | 3300 MHz - 3800 MHz | TDD |
| n79 | 4400 MHz - 5000 MHz | 4400 MHz - 5000 MHz | TDD |
| n80 | 1710 MHz - 1785 MHz | N/A | SUL |
| n81 | 880 MHz - 915 MHz | N/A | SUL |
| n82 | 832 MHz - 862 MHz | N/A | SUL |
| n83 | 703 MHz - 748 MHz | N/A | SUL |
| n84 | 1920 MHz - 1980 MHz | N/A | SUL |
| n86 | 1710 MHz - 1780 MHz | N/A | SUL |

The table below shows the NR operating band defined at high frequencies. This is called the FR2 band.

**[Table 4]**

| NR Operating band | Uplink (UL) operating band | Downlink(DL) operating band | Duplex Mode |
|---|---|---|---|
| | F_{UL_low} - F_{UL_high} | F_{DL_low} - F_{DL_high} | |
| n257 | 26500 MHz - 29500 MHz | 26500 MHz - 29500 MHz | TDD |
| n258 | 24250 MHz - 27500 MHz | 24250 MHz - 27500 MHz | TDD |
| n259 | 37000 MHz - 40000 MHz | 37000 MHz - 40000 MHz | TDD |
| n260 | 37000 MHz - 40000 MHz | 37000 MHz - 40000 MHz | FDD |
| n261 | 27500 MHz - 28350 MHz | 27500 MHz - 28350 MHz | FDD |

### <6G System General>

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 4 below. That is, Table 4 shows the requirements of the 6G system.

**[Table 5]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

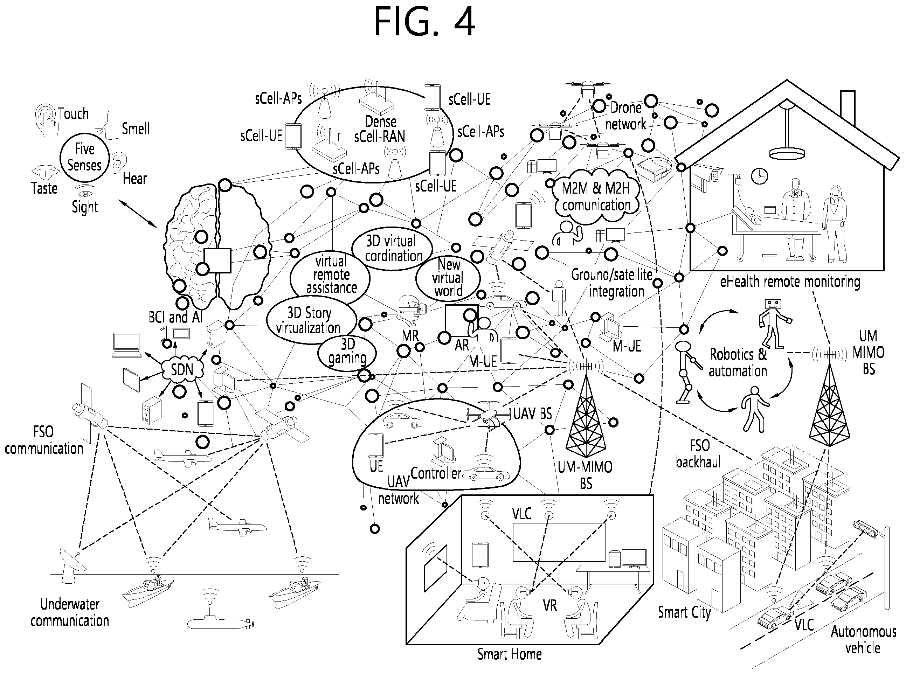

FIG. 4 is a diagram showing an example of a communication structure that can be provided in a 6G system.

The 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.
- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.
- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduce costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability.

### <Core implementation technology of 6G system>

### Artificial Intelligence

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field. However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. In addition, machine learning may be used for antenna selection, power control, symbol detection, etc. in the MIMO system.

Machine learning refers to a series of operations to train a machine in order to create a machine which can perform tasks which cannot be performed or are difficult to be performed by people. Machine learning requires data and learning models. In machine learning, data learning methods may be roughly divided into three methods, that is, supervised learning, unsupervised learning and reinforcement learning.

Neural network learning is to minimize output error. Neural network learning refers to a process of repeatedly inputting training data to a neural network, calculating the error of the output and target of the neural network for the training data, backpropagating the error of the neural network from the output layer of the neural network to an input layer in order to reduce the error and updating the weight of each node of the neural network.

Supervised learning may use training data labeled with a correct answer and the unsupervised learning may use training data which is not labeled with a correct answer. That is, for example, in case of supervised learning for data classification, training data may be labeled with a category. The labeled training data may be input to the neural network, and the output (category) of the neural network may be compared with the label of the training data, thereby calculating the error. The calculated error is backpropagated from the neural network backward (that is, from the output layer to the input layer), and the connection weight of each node of each layer of the neural network may be updated according to backpropagation. Change in updated connection weight of each node may be determined according to the learning rate. Calculation of the neural network for input data and backpropagation of the error may configure a learning cycle (epoch). The learning data is differently applicable according to the number of repetitions of the learning cycle of the neural network. For example, in the early phase of learning of the neural network, a high learning rate may be used to increase efficiency such that the neural network rapidly ensures a certain level of performance and, in the late phase of learning, a low learning rate may be used to increase accuracy.

The learning method may vary according to the feature of data. For example, for the purpose of accurately predicting data transmitted from a transmitter in a receiver in a communication system, learning may be performed using supervised learning rather than unsupervised learning or reinforcement learning.

The learning model corresponds to the human brain and may be regarded as the most basic linear model. However, a paradigm of machine learning using a neural network structure having high complexity, such as artificial neural networks, as a learning model is referred to as deep learning.

Neural network cores used as a learning method may roughly include a deep neural network (DNN) method, a convolutional deep neural network (CNN) method, a recurrent Boltzmman machine (RNN) method and a spiking neural networks (SNN). Such a learning model is applicable.

### THz (Terahertz) Communication

A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

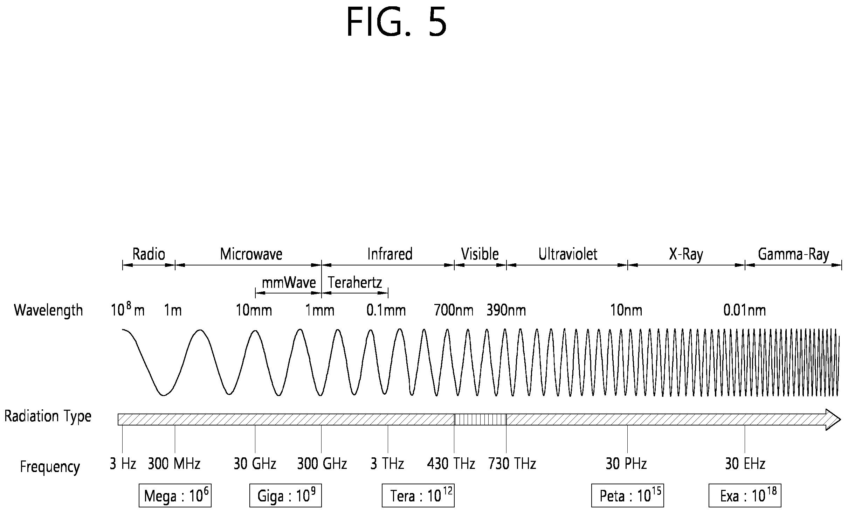

FIG. 5 shows an example of an electromagnetic spectrum.

The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

### Large-scale MIMO

One of core technologies for improving spectrum efficiency is MIMO technology. When MIMO technology is improved, spectrum efficiency is also improved. Accordingly, massive MIMO technology will be important in the 6G system. Since MIMO technology uses multiple paths, multiplexing technology and beam generation and management technology suitable for the THz band should be significantly considered such that data signals are transmitted through one or more paths.

### Hologram Beamforming

Beamforming is a signal processing procedure that adjusts an antenna array to transmit radio signals in a specific direction. This is a subset of smart antennas or advanced antenna systems. Beamforming technology has several advantages, such as high signal-to-noise ratio, interference prevention and rejection, and high network efficiency. Hologram Beamforming (HBF) is a new beamforming method that differs significantly from MIMO systems because this uses a software-defined antenna. HBF will be a very effective approach for efficient and flexible transmission and reception of signals in multi-antenna communication devices in 6G.

### Optical wireless technology

Optical wireless communication (OWC) is a form of optical communication that uses visible light, infrared light (IR), or ultraviolet light (UV) to carry signals. OWC operating in the visible light band (e.g., 390 to 750 nm) is commonly referred to as visible light communication (VLC). VLC implementations can utilize light-emitting diodes (LEDs). VLC can be used in a variety of applications, including wireless local area networks, wireless personal area networks, and vehicular networks.

VLC has several advantages over RF-based technologies. First, the spectrum occupied by VLC is free/unlicensed and can provide extensive bandwidth (THz-level bandwidth). Second, VLC rarely causes significant interference to other electromagnetic devices; therefore, VLC can be applied in sensitive electromagnetic interference applications such as aircraft and hospitals. Third, VLC has strengths in communication security and privacy. The transmission medium of VLC-based networks, namely visible light, cannot pass through walls and other opaque obstacles. Therefore, the transmission range of VLC can be limited to indoors, which can protect users' privacy and sensitive information. Fourth, VLC can use any light source as a base station, eliminating the need for expensive base stations.

Free-space optical communication (FSO) is an optical communication technology that uses light propagating in free space, such as air, outer space, and vacuum, to wirelessly transmit data for telecommunications or computer networking. FSO can be used as a point-to-point OWC system on the ground. FSO can operate in the near-infrared frequency (750-1600 nm). Laser transmitters may be used in FSO implementations, and FSO can provide high data rates (e.g., 10 Gbit/s), providing a potential solution to backhaul bottlenecks.

These OWC technologies are planned for 6G communications in addition to RF-based communications for all possible device-to-access networks. These networks will access network-to-backhaul/fronthaul network connections. OWC technology has already been in use since 4G communication systems, but will be more widely used to meet the needs of 6G communication systems. OWC technologies such as light fidelity, visible light communication, optical camera communication, and FSO communication based on optical bands are already well-known technologies. Communication based on optical wireless technology can provide extremely high data rates, low latency, and secure communication.

Light Detection And Ranging (LiDAR) is also based on the optical band and can be utilized in 6G communications for ultra-high resolution 3D mapping. LiDAR is a remote sensing method that uses near-infrared, visible, and ultraviolet light to illuminate an object, and the reflected light is detected by a light sensor to measure distance. LiDAR can be used for fully automated driving of cars.

### FSO Backhaul Network

The characteristics of the transmitter and receiver of the FSO system are similar to those of an optical fiber network. Accordingly, data transmission of the FSO system similar to that of the optical fiber system. Accordingly, FSO may be a good technology for providing backhaul connection in the 6G system along with the optical fiber network. When FSO is used, very long-distance communication is possible even at a distance of 10,000 km or more. FSO supports mass backhaul connections for remote and non-remote areas such as sea, space, underwater and isolated islands. FSO also supports cellular base station connections.

### Non-Terrestrial Networks (NTN)

The 6G system will integrate terrestrial and aerial networks to support vertically expanding user communications. 3D BS will be delivered via low-orbit satellites and UAVs. Adding a new dimension in terms of altitude and associated degrees of freedom makes 3D connectivity quite different from traditional 2D networks. NR considers Non-Terrestrial Networks (NTNs) as one way to accomplish this. An NTN is a network or network segment that uses RF resources aboard a satellite (or UAS platform). There are two common scenarios for NTNs that provide access to user equipment: transparent payloads and regenerative payloads. The following are the basic elements of an NTN.
- One or more sat-gateways that connect the NTN to the public data network.
- GEO satellites are fed by one or several satellite gateways deployed across the satellite target range (e.g., regional or continental coverage). We assume that the UEs in a cell are served by only one sat-gateway.
- Non-GEO satellites that are continuously serviced by one or multiple satellite gateways at a time. The system ensures service and feeder link continuity between successively serviced satellite gateways with a time duration sufficient to allow for mobility anchoring and handover.
- The feeder link or radio link between the satellite gateway and the satellite (or UAS platform).
- The service link or radio link between the user equipment and the satellite (or UAS platform).
- A satellite (or UAS platform) that can implement transparent or regenerative (with onboard processing) payloads. Satellite (or UAS platform) generated beams typically produce multiple beams for a given service area, depending on the field of view. The footprint of the beam is typically elliptical. The field of view of the satellite (or UAS platform) depends on the onboard antenna diagram and the minimum angle of attack.
- Transparent payload: Radio frequency filtering, frequency conversion, and amplification, so the waveform signal repeated by the payload is unchanged.
- Regenerative payload: radio frequency filtering, frequency conversion and amplification, demodulation/decryption, switching and/or routing, and coding/modulation. This is effectively the same as having all or part of the base station functions (e.g. gNB) on board a satellite (or UAS platform).
- For satellite deployments, optionally an inter-satellite link (ISL). This requires a regenerative payload on the satellite. ISLs can operate at RF frequencies or in the optical band.
- User equipment is served by satellites (or UAS platforms) within the targeted coverage area.

Typically, GEO satellites and UAS are used to provide continental, regional, or local services.

Typically, constellations in LEO and MEO are used to provide coverage in both the Northern and Southern Hemispheres. In some cases, constellations can also provide global coverage, including polar regions. The latter requires proper orbital inclination, sufficient beams generated, and links between satellites.

### Quantum Communication

Quantum communication is a next-generation communication technology that can overcome the limitations of conventional communication such as security and high-speed computation by applying quantum mechanical properties to the field of information and communication. Quantum communication provides a means of generating, transmitting, processing, and storing information that cannot be expressed in the form of 0s and 1s according to the binary bit information used in existing communication technologies. In conventional communication technologies, wavelengths or amplitudes are used to transmit information between the transmitting and receiving ends, but in quantum communication, photons, the smallest unit of light, are used to transmit information between the transmitting and receiving ends. In particular, in the case of quantum communication, quantum uncertainty and quantum irreversibility can be used for the polarization or phase difference of photons (light), so quantum communication has the characteristic of being able to communicate with perfect security. In addition, quantum communication can also enable ultra-high-speed communication using quantum entanglement under certain conditions.

### Cell-free Communication

Tight integration of multiple frequencies and heterogeneous communication technologies is critical in 6G systems. As a result, users can seamlessly move from one network to another without having to create any manual configurations on their devices. The best network is automatically selected from the available communication technologies. This will break the limitations of the cell concept in wireless communication. Currently, user movement from one cell to another causes too many handovers in dense networks, resulting in handover failures, handover delays, data loss, and ping-pong effects. 6G cell-free communication will overcome all this and provide better QoS.

Cell-free communication is defined as "a system in which a large number of geographically distributed antennas (APs) cooperatively serve a small number of terminals using the same time/frequency resources with the help of a fronthaul network and a CPU". A single terminal is served by a set of multiple APs, which is called an AP cluster. There are several ways to form AP clusters, among which the method of configuring AP clusters with APs that can significantly contribute to improving the reception performance of the terminal is called the terminal-centered clustering method, and when using this method, the configuration is dynamically updated as the terminal moves. By adopting this device-centric AP clustering technique, the device is always at the center of the AP cluster and is therefore free from inter-cluster interference that can occur when the device is located at the boundary of the AP cluster. This cell-free communication will be achieved through multi-connectivity and multi-tier hybrid technologies and different heterogeneous radios in the device.

### Integration of Wireless Information and Energy Transfer (WIET)

WIET uses the same field and wave as a wireless communication system. In particular, a sensor and a smartphone will be charged using wireless power transfer during communication. WIET is a promising technology for extending the life of battery charging wireless systems. Therefore, devices without batteries will be supported in 6G communication.

### Integration of Wireless Communication and Sensing

An autonomous wireless network is a function for continuously detecting a dynamically changing environment state and exchanging information between different nodes. In 6G, sensing will be tightly integrated with communication to support autonomous systems.

### Integrated Access and Backhaul Network

In 6G, the density of access networks will be enormous. Each access network is connected by optical fiber and backhaul connection such as FSO network. To cope with a very large number of access networks, there will be a tight integration between the access and backhaul networks.

### Big Data Analysis

Big data analysis is a complex process for analyzing various large data sets or big data. This process finds information such as hidden data, unknown correlations, and customer disposition to ensure complete data management. Big data is collected from various sources such as video, social networks, images and sensors. This technology is widely used for processing massive data in the 6G system.

### Reconfigurable Intelligent Surface

There is a large body of research that considers the radio environment as a variable to be optimized along with the transmitter and receiver. The radio environment created by this approach is referred to as a Smart Radio Environment (SRE) or Intelligent Radio Environment (IRE) to highlight its fundamental differences from past design and optimization criteria. Various terms have been proposed for the reconfigurable intelligent antenna (or intelligent reconfigurable antenna technology) technology that enables SRE, including Reconfigurable Metasurfaces, Smart Large Intelligent Surfaces (SLIS), Large Intelligent Surfaces (LIS), Reconfigurable Intelligent Surface (RIS), and Intelligent Reflecting Surface (IRS).

In the case of THz band signals, there are many shadowed areas caused by obstacles due to the strong straightness of the signal, and RIS technology is important to expand the communication area by installing RIS near these shadowed areas, strengthening communication stability and enabling additional value-added services. RIS is an artificial surface made of electromagnetic materials that can alter the propagation of incoming and outgoing radio waves. While RIS can be seen as an extension of massive MIMO, it has a different array structure and operating mechanism than massive MIMO. RIS also has the advantage of lower power consumption because it operates as a reconfigurable reflector with passive elements, meaning it only passively reflects the signal without using an active RF chain. In addition, each of the passive reflectors in the RIS must independently adjust the phase shift of the incident signal, which can be advantageous for wireless communication channels. By properly adjusting the phase shift through the RIS controller, the reflected signal can be gathered at the target receiver to boost the received signal power.

In addition to reflecting radio signals, there are also RISs that can adjust transmission and refraction properties, and these RISs are mainly used for O2I (Outdoor to Indoor). Recently, STAR-RIS (Simultaneous Transmission and Reflection RIS), which provides transmission while reflecting, has also been actively researched.

### Metaverse

Metaverse is a portmanteau of the words "meta" meaning virtual, transcendent, and "universe" meaning space. Generally speaking, the metaverse is a three-dimensional virtual space where the same social and economic activities as in the real world are commonplace.

Extended Reality (XR), a key technology enabling the Metaverse, is the fusion of the virtual and the real, which can extend the experience of reality and provide a unique sense of immersion. The high bandwidth and low latency of 6G networks will enable users to experience more immersive virtual reality (VR) and augmented reality (AR) experiences.

### Autonomous Driving, Self-driving

For perfect autonomous driving, vehicles must communicate with each other to inform each other of dangerous situations, or with infrastructure such as parking lots and traffic lights to check information such as the location of parking information and signal change times. Vehicle-to-Everything (V2X), a key element in building an autonomous driving infrastructure, is a technology that enables vehicles to communicate and share information with various elements on the road, such as vehicle-to-vehicle (V2V) and vehicle-to-infrastructure (V2I), for autonomous driving.

In order to maximize the performance of autonomous driving and ensure high safety, fast transmission speeds and low latency technologies are essential. In addition, in the future, autonomous driving will go beyond delivering warnings and guidance messages to the driver to actively intervene in vehicle operation and directly control the vehicle in dangerous situations, and the amount of information that needs to be transmitted and received will be enormous, so 6G is expected to maximize autonomous driving with faster transmission speeds and lower latency than 5G.

### Unmanned Aerial Vehicle (UAV)

An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

### Block-chain

A blockchain will be important technology for managing large amounts of data in future communication systems. The blockchain is a form of distributed ledger technology, and distributed ledger is a database distributed across numerous nodes or computing devices. Each node duplicates and stores the same copy of the ledger. The blockchain is managed through a peer-to-peer (P2P) network. This may exist without being managed by a centralized institution or server. Blockchain data is collected together and organized into blocks. The blocks are connected to each other and protected using encryption. The blockchain completely complements large-scale IoT through improved interoperability, security, privacy, stability and scalability. Accordingly, the blockchain technology provides several functions such as interoperability between devices, high-capacity data traceability, autonomous interaction of different IoT systems, and large-scale connection stability of 6G communication systems.

### <Carrier Aggregation>

A carrier aggregation system is now described.

A carrier aggregation system aggregates a plurality of component carriers (CCs). A meaning of an existing cell is changed according to the above carrier aggregation. According to the carrier aggregation, a cell may signify a combination of a downlink component carrier and an uplink component carrier or an independent downlink component carrier.

Further, the cell in the carrier aggregation may be classified into a primary cell, a secondary cell, and a serving cell. The primary cell signifies a cell operated in a primary frequency. The primary cell signifies a cell which UE performs an initial connection establishment procedure or a connection reestablishment procedure or a cell indicated as a primary cell in a handover procedure. The secondary cell signifies a cell operating in a secondary frequency. Once the RRC connection is established, the secondary cell is used to provided an additonal radio resouce.

As described above, the carrier aggregation system may support a plurality of component carriers (CCs), that is, a plurality of serving cells unlike a single carrier system.

The carrier aggregation system may support a cross-carrier scheduling. The cross-carrier scheduling is a scheduling method capable of performing resource allocation of a PDSCH transmitted through other component carrier through a PDCCH transmitted through a specific component carrier and/or resource allocation of a PUSCH transmitted through other component carrier different from a component carrier basically linked with the specific component carrier.

Carrier aggregation may be classified into a continuous carrier aggregation in which aggregated carriers are continuous and a non-contiguous carrier aggregation in which aggregated carriers are separated from each other. In the following, carrier aggregation simply should be understood to include both the case where the component carrier (CC) is continuous and the case where it is discontinuous. The number of CCs aggregated between the downlink and the uplink may be set differently. A case in which the number of downlink CCs and the number of uplink CCs are the same may be referred to as symmetric aggregation, and a case in which the number of downlink CCs are different may be referred to as asymmetric aggregation.

On the other hand, carrier aggregation can also be classified into inter-band CA and intra-band CA. The inter-band CA is a method of aggregating and using each CC existing in different operating bands, and the intra-band CA is a method of aggregating and using each CC in the same operating band. In addition, the CA technology is more specifically, intra-band contiguous CA, intra-band non-contiguous CA and inter-band discontinuity. Non-Contiguous) CA.

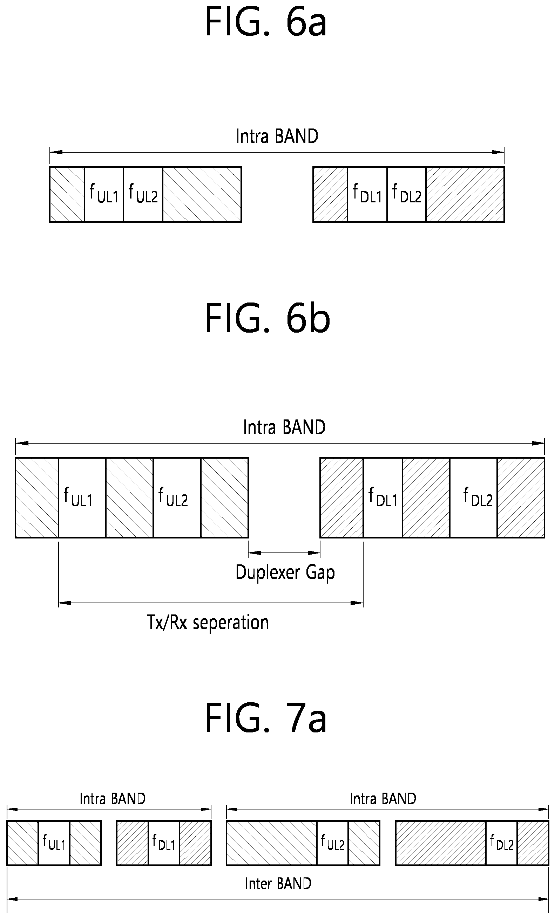

Fig. 6a illustrates a concept view of an example of intra-band contiguous CA. Fig. 6b illustrates a concept view of an example of intra-band non-contiguous CA.

LTE-advanced adds various schemes including uplink MIMO and carrier aggregation in order to realize high-speed wireless transmission. The CA may be split into the intra-band contiguous CA shown in Fig. 6a and the intra-band non-contiguous CA shown in Fig. 6b.

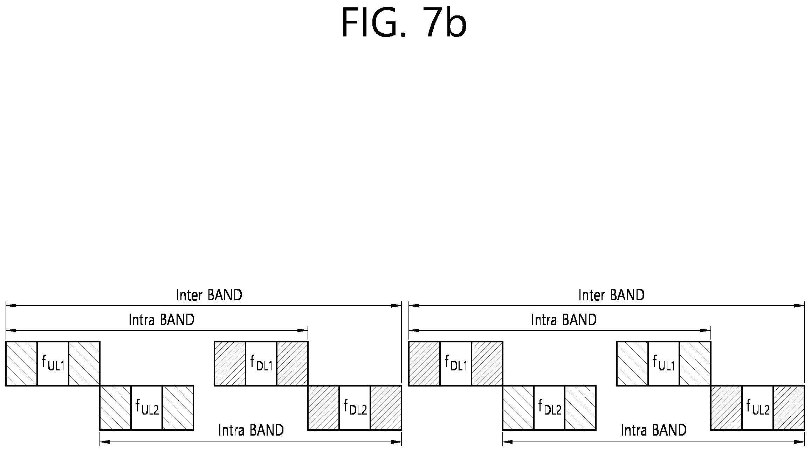

Fig. 7a illustrates a concept view of an example of a combination of a lower frequency band and a higher frequency band for inter-band CA. Fig. 7b illustrates a concept view of an example of a combination of similar frequency bands for inter-band CA.

The inter-band carrier aggregation may be separated into inter-band CA between carriers of a low band and a high band having different RF characteristics of inter-band CA as shown in Fig. 7a and inter-band CA of similar frequencies that may use a common RF terminal per component carrier due to similar RF (radio frequency) characteristics as shown in Fig. 7b.

The carrier aggregation configuration is a combination of operating bands, each supporting a carrier aggregation bandwidth class. The following table is an example of CA bandwidth classes in NR.

**[Table 6]**

| NR CA bandwidth class | Aggregated channel bandwidth | Number of contiguous CC | Fallback group |
|---|---|---|---|
| A | BW Channel ≤ BW_{Channel,max} | 1 | 1, 2, 3 |
| B | 20 MHz ≤ BW_{Channel_CA} ≤ 100 MHz | 2 | 2, 3 |
| C | 100 MHz < BW_{Channel_CA} ≤ 2 x BW_{Channel,max} | 2 | 1, 3 |
| D | 200 MHz < BW_{Channel_CA} ≤ 3 x BW_{Channel,max} | 3 | |
| E | 300 MHz < BW_{Channel_CA} ≤ 4 X BW_{Channel,max} | 4 | |
| G | 100 MHz < BW_{Channel_CA} ≤ 150 MHz | 3 | 2 |
| H | 150 MHz < BW_{Channel_CA} ≤ 200 MHz | 4 | |
| I | 200 MHz < BW_{Channel_CA} ≤ 250 MHz | 5 | |
| J | 250 MHz < BW_{Channel_CA} ≤ 300 MHz | 6 | |
| K | 300 MHz < BW_{Channel_CA} ≤ 350 MHz | 7 | |
| L | 350 MHz < BW_{Channel_CA} ≤ 400 MHz | 8 | |
| M | 50 MHz < BW_{Channel_CA} ≤ [180] MHz | 3 | 3 |
| N | 80 MHz < BW_{Channel_CA} ≤ [240] MHz | 4 | |
| O | 100 MHz ≤ BW_{Channel_CA} ≤ [300] MHz | 5 | |

In Table 6, BW_{Channel_CA} is maximum channel bandwidth supported among all bands. It is mandatory for a UE to be able to fallback to lower order NR CA bandwidth class configuration within a fallback group. It is not mandatory for a UE to be able to fallback to lower order NR CA bandwidth class configuration that belong to a different fallback group.

### <Dual Connectivity (DC)>

Recently, a scheme for simultaneously connecting UE to different base stations, for example, a macro cell base station and a small cell base station, is being studied. This is called dual connectivity (DC).

For example, when DC is configured in E-UTRA, the following exemplary description may be applied.

In DC, the eNodeB for the primary cell (PCell) may be referred to as a master eNodeB (hereinafter referred to as MeNB). In addition, the eNodeB only for the secondary cell (Scell) may be referred to as a secondary eNodeB (hereinafter referred to as SeNB).

A cell group including a primary cell (PCell) implemented by MeNB may be referred to as a master cell group (MCG) or PUCCH cell group 1. A cell group including a secondary cell (Scell) implemented by the SeNB may be referred to as a secondary cell group (SCG) or PUCCH cell group 2.

Meanwhile, among the secondary cells in the secondary cell group (SCG), a secondary cell in which the UE can transmit Uplink Control Information (UCI), or the secondary cell in which the UE can transmit a PUCCH may be referred to as a super secondary cell (Super SCell) or a primary secondary cell (Primary Scell; PScell).

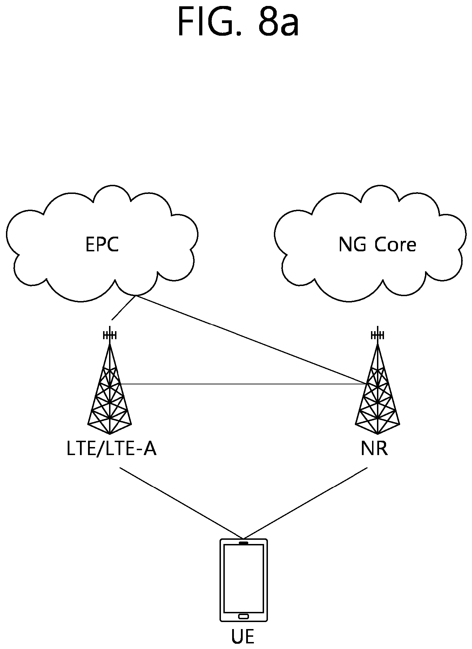

**FIGS. 8a to 8c** **are diagrams illustrating exemplary architecture for a next-generation mobile communication service.**

Referring to FIG. 8a, a UE is connected in dual connectivity (DC) with an LTE/LTE-A cell and a NR cell.

The NR cell is connected with a core network for the legacy fourth-generation mobile communication, that is, an Evolved Packet core (EPC). In example shown in FIG. 8a, the UE is configured with EN-DC(E-UTRA-NR DC). The UE, which is configured with EN-DC, is connected with an E-UTRA (that is, LTE/LTE-A) cell and an NR cell. Here, a PCell in EN-DC may be an E-UTRA (that is, LTE/LTE-A) cell, and a PSCell in EN-DC may be an NR cell.

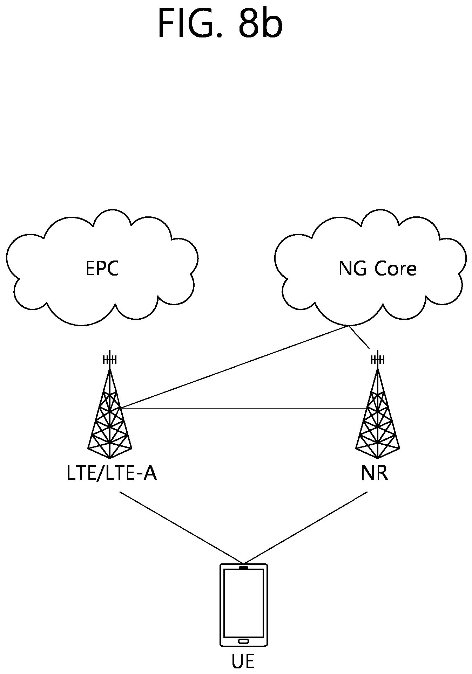

Referring to FIG. 8b, the LTE/LTE-A cell is connected with a core network for 5th generation mobile communication, that is, a Next Generation (NG) core network, unlike the example in FIG. 8a.

A service based on the architecture shown in FIGS. 4a and 4b is referred to as a non-standalone (NSA) service.

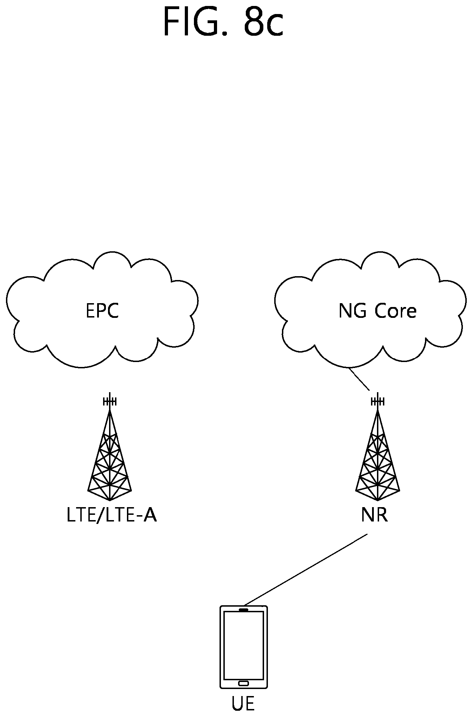

Referring to FIG. 8c, a UE is connected only with an NR cell. A service based on this architecture is referred to as a standalone (SA) service.

### <Random Access Channel (RACH) Procedure>

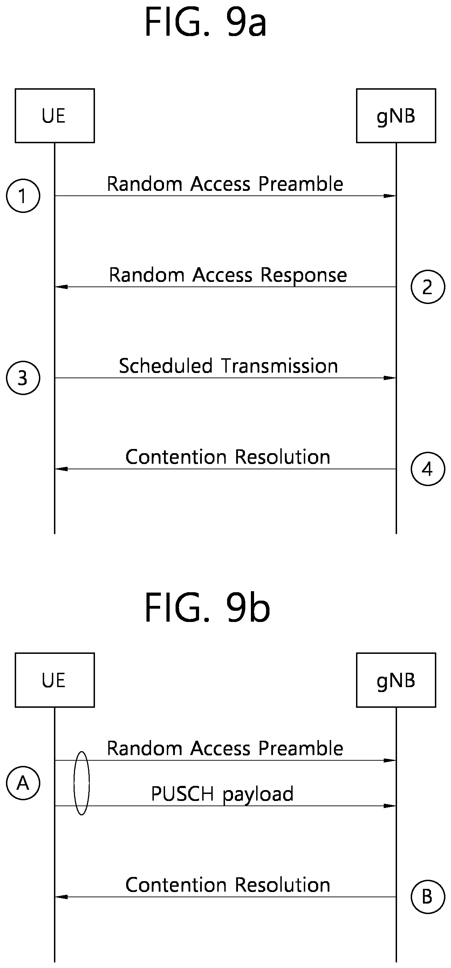

**FIGS. 9a to 9e** **are examples of RACH procedures applicable to one embodiment of the present disclosure.**

Referring to FIGS. 9a to 9e, an RACH procedure according to one embodiment of the present disclosure is described. The embodiments of FIGS. 9a to 9e may be combined with various embodiments of the present disclosure.

In one embodiment of the present disclosure, if RF requirements (e.g., Tx RF performance requirements and/or Rx RF performance requirements) are described, the UE can satisfy these RF requirements. For example, the UE can be tested to satisfy the RF requirements (e.g., Tx RF performance requirements and/or Rx RF performance requirements) according to one embodiment of the present disclosure. In the first embodiment of the present disclosure, a UE that satisfies these RF requirements can perform the RACH procedure. When the UE transmits messages, data, signals, etc. to the gNB, the UE satisfies the Tx RF performance requirements described in the first embodiment of the present disclosure. When the UE receives messages, data, signals, etc. from the gNB, the UE satisfies the Rx RF performance requirements described in Example 1 of the present disclosure.

To connect the UE to the 5G network, the UE and the 5G network must synchronize on the uplink and downlink. Downlink synchronization is performed when the UE successfully decodes the SSB sent by the gNB. To establish uplink synchronization and RRC connection, the UE must perform the RACH random access procedure.

Two types of random access procedures are supported. The two types of random access procedures include a four-step random access (RA) type using MSG1 and a two-step RA type using MSGA.

Each of the two types of RA procedures can support Contention Based Random Access (CBRA) and Non-Contention or Contention Free Random Access (CFRA), as shown in FIGS. 9a to 9e below. Depending on the network settings, the UE can select the random access type when starting the random access procedure.

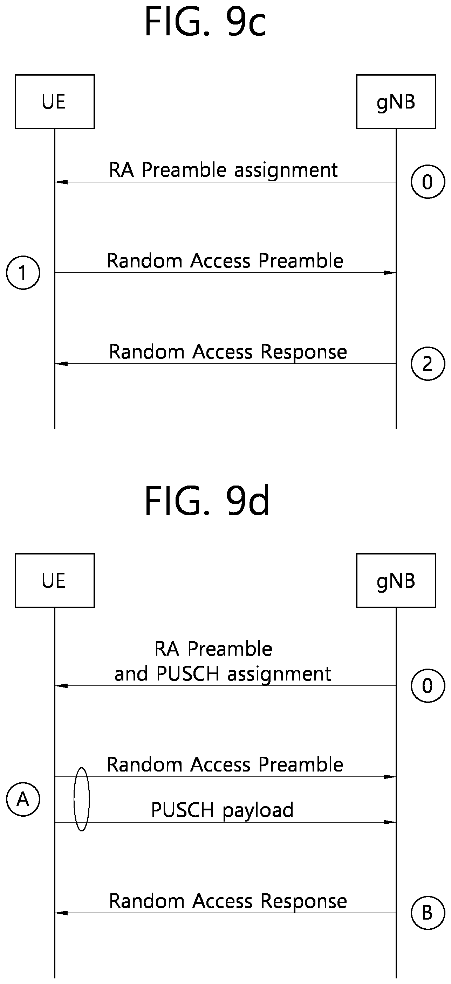

Referring to FIG. 9a and FIG.9c, a four-step RA type using MSG1 is described.

The four-step RA type of MSG1 includes the preamble of the PRACH. The UE transmits MSG1. After the UE sends MSG1, the UE monitors the response of the network within the configured window.

In the case of the CBRA according to the example in FIG. 9a, when the UE receives a random access response (MSG2) from the gNB, the UE may transmit MSG3 using the UL grant scheduled by the response message. And, the UE may monitor the contention resolution. If the contention resolution is not successful even after the MSG3 retransmission, the UE performs the MSG1 transmission again.

In the case of the CFRA according to the example in FIG. 9c, a dedicated preamble for MSG1 transmission is allocated by the network. The gNB sends the RA preamble allocation to the UE. The UE transmits MSG1 containing the random access preamble to the gNB. Upon receiving a random access response from the network, the UE terminates the random access procedure.

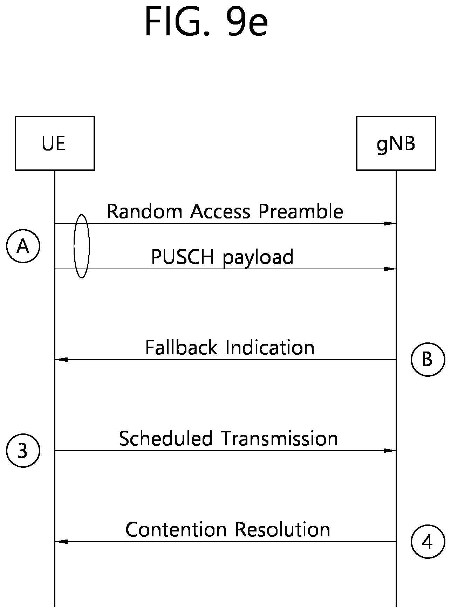

Refer to FIG. 9b, FIG.9d, and FIG.9e to explain the two-step RA type. The two-step RA type MSGA includes a random access preamble and a PUSCH payload on the PRACH. After the UE transmits the MSGA, the UE monitors the response from the network within a configured window.

In the case of the CBRA according to the example in FIG. 9b, after the UE has received a network response (e.g., MSGB), if the contention resolution is successful, the UE terminates the random access procedure. If a fallback indication is received within MSGB, as shown in FIG. 9e, the UE performs the MSG3 transmission using the UL grant scheduled in the fallback indication and monitors the contention resolution. If the contention resolution is not successful after the (re)transmission of MSG3, the UE performs the MSGA transmission again.

In the case of CFRA according to the example in FIG. 9d, the UE may receive the RA preamble allocation and PUSCH allocation from the gNB. Then, dedicated preamble and PUSCH resources may be configured for MSGA transmission. The UE transmits the MSGA. When the UE receives a network response, the UE terminates the random access procedure.

If the random access procedure of the two-step RA type is not completed even after multiple MSGA transmissions, the UE may be configured to switch to the four-step RA type CBRA.

### <Refernece sensitivity>

Reference sensitivity is explained.

Reference sensitivity power level REFSENS can be the minimum average power applied to each UE antenna port for all UE categories. At this minimum average power, throughput may need to meet or exceed the requirements of the specified reference measurement channel.

The reference sensitivity level for DC is explained.

Unless an exception for sensitivity degradation of Clause 7.3 of TS 38.101-1 V17.3.0, clause 7.3 of TS 38.101-2 V17.6.0, clause 7.3 of TS 36.101, or clause 7.3 of TS 36.101 V17.7.0 is allowed, the REFSENS requirement for EN-DC, E-UTRA and NR single carrier, CA and MIMO operation applies to all downlink bands in the EN-DC configuration listed in clause 5.5B of TS 38.101-1. The permitted exception also applies to higher-order EN-DC configuration combinations that include one of the band combinations for which the exception is permitted. The reference sensitivity exception is specified by applying the maximum sensitivity degradation (MSD) to the application REFSENS requirement.

For NR uplink transmissions using QPSK DFT-s-OFDM waveforms, the EN-DC REFSENS requirement must be met. Unless otherwise specified, the UL allocation uses the lowest SCS allowed for a given channel BW. The limits on the maximum output power configured for the uplink apply as per clause 6.2B.4.

For inter-band EN-DC, the receiver REFSENS requirement does not apply to 1.4 MHz and 3 MHz E-UTRA carriers. For inter-band EN-DC using a single carrier per cell group and multiple carriers per cell group, the REFSENS requirements defined in TS 38.101-1, TS 38.101-2 V17.6.0 and TS 36.101 V17.7.0 can be applied even when both the downlink carrier and both uplink carriers are active, unless the sensitivity exception is allowed in clause 7.3 of TS 38.101-1 V17.3.0 or clause 7.3 of TS 36.101.

For band-to-band EN-DC, the reference sensitivity requirement may only be validated for one band-to-band EN-DC configuration per NR band with both uplink carriers active.

For intra-band contiguous EN-DC, the following example applies.

For in-band continuous EN-DC configuration, the reference sensitivity power level REFSENS may be the minimum average power applied to each UE antenna port. The carrier throughput of the E-UTRA and NR CG shall meet or exceed the requirements for the specified E-UTRA and NR reference measurement channels. The reference sensitivity requirements may apply as supported by the UE with all uplink carriers and all downlink carriers enabled in EN-DC configuration and uplink EN-DC configuration. For EN-DC configurations where uplinks are not available in the MCG or SCG or where the UE supports only single uplink operation, the reference sensitivity requirements for single uplink transmission shall apply. The downlink carrier of a cell group with an uplink shall be configured closer to the uplink operating band than the downlink carrier of a cell group without an uplink.

For in-band continuous EN-DC configurations, sensitivity degradation is allowed. The reference sensitivity is defined only for specific uplink and downlink test points, and the E-UTRA and NR single carrier requirements do not apply.

Exceptions to the reference sensitivity due to UL harmonic interference to the EN-DC of NR FR1 are as follows. For example, if some of the other bands in the same EN-DC configuration are affected by UL harmonic interference, a sensitivity degradation is allowed for the band. The reference sensitivity exception for the victim band (high) can be specified by the uplink configuration of the agressor band (low).

Reference sensitivity exceptions due to receiver harmonic mixing for EN-DC on NR FR1 are described as follows. For example,

If the receiver harmonic mix is affected by different band portions of the same EN-DC configuration, a degradation of sensitivity to the band is allowed. The reference sensitivity exception for the victim band (low) is specified by the uplink configuration of the agressor band (high).

In NR FR1, exceptions to the reference sensitivity due to cross band isolation of EN-DC are described as follows. For example, if some of the other bands of the same EN-DC configuration are affected by UL due to cross band isolation issues, a sensitivity degradation is allowed for those bands. The reference sensitivity exception for the victim band is specified by the uplink configuration of the specified aggresor band.

The MSD for intermodulation interference due to dual uplink operation from NR FR1 to EN-DC can be described as follows. For example, the following may indicate that for the EN-DC configuration in NR FR1, the UE may not support simultaneous dual uplink operation due to intermodulation interference overlapping in frequency with its own downlink channel bandwidth:
- If the intermodulation order is 2;
- When the intermodulation order is 3, the two operating bands are between 450 MHz and 960 MHz, or between 1427 MHz and 2690 MHz.

For EN-DC configurations of NR FR1 where the intermodulation products from dual uplink operation do not interfere with its own primary downlink channel bandwidth, the UE may be required to operate in dual and triple uplink modes. For these test points, the reference sensitivity level may be relaxed by the amount of parameter MSD.

An MSD is described, according to one embodiment of the present disclosure. Embodiments according to the MSD may be combined with various embodiments of the present disclosure.

In 5G NR, when a terminal performs CA/DC operation, an uplink aggressor may affect the downlink (DL) band of another band. In this case, the reference sensitivity (REFSENS) regulation of the victim DL band is relaxed, which can be called reference sensitivity exception or maximum sensitivity degradation (MSD). Note that the victim DL band can also be expressed as a protected band or a band to be protected.

For example, TS38.101-1 V17.3.0 and TS38.101-3 define the rules for CA/DC MSDs. MSDs are categorized into four types depending on the nature of the UL aggressor.

The factors that cause MSDs (MSD types) are, for example, the following
- Harmonic, Harmonic mixing, Inter-modulation, Cross band isolation

The MSD for each band combination of CA/DC can be defined according to each of the four classifications above, and can also be defined differently depending on the power class of the UL aggressor and the uplink/downlink configuration.

The MSD value for each band combination and MSD type can be calculated based on the transceiver structure and the characteristics of the individual devices that make up the transceiver.

If the MSD of a DL band is defined in the terminal performing CA/DC operation, the network can define the REFSENS of that DL band as shown in the formula below:

REFSENS (for CA/DC) : REFSENS (for single band) + MSD

In 5G NR, Dual Connectivity (DC) combinations and Carrier Aggregation (CA) combinations in which various E-UTRA bands and/or various NR bands operate simultaneously may be supported. It is necessary to define MSD due to self-interference at the terminal receiving end for uplink based on each DC band combination and CA band combination of the operator. By defining such MSD, it is possible to allow a relaxation of the receiving sensitivity of the terminal. Alternatively, by defining such MSD, an additional device can be used to mitigate distortion caused by inter-modulation distortion (IMD) and/or harmonic components (e.g., using a harmonic trap filter, defining a measurement method in an area free of desense caused by IMD).

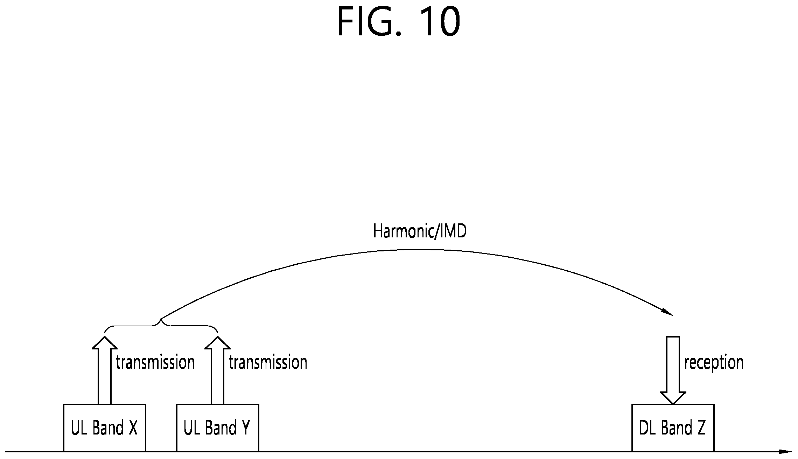

Referring to the example in FIG. 10, we will first explain an example of self-interference.

The following drawings are provided to illustrate specific examples of the present disclosure. The names of specific devices or specific signals/messages/fields shown in the drawings are provided as examples, and the technical features of the present disclosure are not limited to the specific names used in the following drawings.

**FIG. 10** **illustrates an example of situation in which an uplink signal transmitted via an uplink operating band affects reception of a downlink signal on via downlink operating band.**

In FIG. 10, intermodulation distortion (IMD) may refer to amplitude modulation of a signal comprising two or more different frequencies due to nonlinearities or time variations in the system. Intermodulation between frequency components can form additional components not only at frequencies that are not at either harmonic frequency (integer multiple), such as harmonic distortion, but also at frequencies at the sum and difference of the original frequencies, and at frequencies at the sum and difference of multiples of these frequencies.

Referring to FIG. 10, an example in which CA is configured for a UE is shown. For example, the UE may perform communication based on CA based on one downlink operating band (DL Band Z) and one uplink operating band (UL Band Y). In the example of FIG. 10, only an example in which two uplink operating bands are used and one downlink operating band is used to analyze the influence of IMD is shown, but this is only an example. The scope of the present disclosure of this specification may also include a case in which one or more downlink operating bands and two or more uplink operating bands are used. The example in FIG. 10 illustrates CA, but this is for illustrative purposes only, and a similar description can be applied to DC.

As shown in FIG. 10, in a situation where one downlink operating band and two uplink operating bands are configured for CA, the UE can transmit an uplink signal through the two uplink operating bands. In this case, harmonic components and intermodulation distortion (IMD) components generated based on the frequency band of the uplink signal may corrspond to their own downlink band. That is, in the example of FIG. 10, when the terminal transmits an uplink signal, a harmonic component and an intermodulation distortion (IMD) component may be generated, which may affect the downlink band of the terminal itself.

When receiving a downlink signal, the UE shall be set to satisfy the reference sensitivity power level (REFSENS), which is the minimum average power for each antenna port of the UE.

If harmonic and/or IMD components occur, as in the example of FIG. 10, it is possible that the REFSENS for the downlink signal is not satisfied due to the uplink signal transmitted by the UE itself. The reference sensitivity power level REFSENS may be the minimum average power applied to each UE antenna port for all UE categories. Based on the REFSENS, the throughput shall meet or exceed the requirements of the specified reference measurement channel.

For example, REFSENS can be set so that the downlink signal throughput of the UE is more than 95% of the maximum throughput of the reference measurement channel. When a harmonic component and/or an IMD component occurs, there is a possibility that the downlink signal throughput may be reduced to 95% or less of the maximum throughput.

Therefore, if a harmonic component and/or IMD component occurs, it can be determined whether the harmonic component and IMD component of the UE occur, and since the MSD (Maximum Sensitivity Degradation) value is defined for the frequency band, relaxation of the REFSENS may be allowed in the receiving band related to its transmission signal. Here, the MSD may mean a maximum allowable reduction of the REFSENS. If an MSD is defined for a specific operating band for a UE configured with NR-CA, EN-DC, NR E-UTRA DC (NE-DC) or NR-DC, the REFSENS for that operating band may be relaxed by the amount of the defined MSD.

The Maximum sensitivity Degradation (MSD) values defined in the FR1 band are often much larger than the MSD of the current terminal. For example, the performance of the terminal may be better than in the past, so a value as large as the MSD value defined in the FR1 band may not be required. Due to the too large MSD value, the network may have to limit the CA/DC band combination scheduling. Therefore, for terminals with low MSD values, there needs to be a way for the network to utilise low MSD (e.g., lower MSD).

For example, when UE reports lower MSD to the network, there is a problem of signalling overhead occurring if too much information is reported.

The present disclosure provides various examples of effective methods for supporting lower MSD. For example, when lower MSD is used, the present disclosure provides examples of actions in which the UE effectively reports to the network information related to the lower MSD that the UE supports. This allows the UE to minimize signalling overhead. For example, without interacting with the network, the UE can transmit its lower MSD capability to the network. Another example is that UE can minimize signalling overhead by interacting with the network.

The following example illustrates how the UE reports its capabilities related to lower MSD.

The following example explains how a UE that supports lower MSD without interacting with the network reports the lower MSD characteristics to the network. Currently, TS38.101-1 and TS38.101-3 contain MSD information for band combinations that support carrier aggregation (CA) or dual connectivity (DC). For example, MSD can be defined by band combination, power class (PC), MSD interference type (harmonic, harmonic mixing, cross band isolation and intermodulation), and victim band.

The UE may report the performance (or capability) related to the Lower MSD to the network. In this case, as explained above, if all the information related to the MSD is reported to the network, the signaling overhead of the UE may become too large. This may make it difficult to implement in the UE. Therefore, to resolve this signaling overhead, it is necessary to briefly define the improved MSD value used for signaling. The following example shows a simplified example of using an improved MSD value to solve the signalling overhead.

For example, for a UE that supports lower MSD, the following example can be performed. Assume that UE1 and UE2 are located at the same distance from serving cell A. UE1 supports lower MSD, and UE2 does not support lower MSD. If only UE1 supports lower MSD, the MSD of UE1 is smaller than that of UE2 in CA/DC-related operations. Therefore, UE1 can secure a better signal-to-noise ratio (SNR) than UE2. The network can determine that UE1 can secure a better SNR based on the fact that UE1 supports lower MSD. The network can assign a modulation order to UE1 that can expect a higher transmission rate. Accordingly, the transmission rate can be improved in the communication between the network and UE1.

UE may report lower MSD capability to the network. In this case, if the following example applies, signaling overhead can be reduced. The following examples can be combined and applied:
- The network can designate terminals that support lower MSD (per UE). For example, multiple UEs can transmit lower MSD capability to the network. Lower MSD capability can be defined differently for each UE. Therefore, depending on the situation, the lower MSD capability of the UE may not be useful in communication between the network and the UE. By designating some of the terminals among the terminals that support lower MSD, the network can support efficient communication.
- A terminal that supports a lower MSD can guarantee a certain lower MSD value. For example, for all types of MSD values for all band combinations supported by the terminal, a certain lower MSD value can be guaranteed. Here, the certain lower MSD value can be expressed as [X]. For example, the certain lower MSD value can be 20 dB. For example, guaranteeing an MSD value below a certain level may mean that the terminal does not have an MSD value above a certain level. For example, depending on the specific band combination, the existing MSD value may be defined as 30 dB or higher. In this case, the lower MSD of the UE may be 10 dB or lower. Then, for a band combination with an existing MSD value of 30 dB, the UE can apply an MSD value of 10 dB instead of a 30 dB MSD value.
- A terminal that supports lower MSD can express the fact that the terminal supports lower MSD with 1 bit. For example, a terminal can express whether it supports lower MSD with 0=not support and 1=support. A terminal can also express the lower MSD type with X bits. Here, the lower MSD type can mean the value of lower MSD. For example, X=2. In this case, the terminal can be represented as 00: 0 dB or less, 01= 10 dB or less, 10 = 20 dB or less, and 11= 30 dB or less, based on two bits. For example, the lower MSD type can represent the maximum MSD value of the terminal.

The content related to the lower MSD described in the various examples of the present disclosure can be utilized in NR-CA for CA/DC, EN-DC, NR E-UTRA DC (NE-DC) and NR-DC.

By combining at least one of the examples described above, the signalling for terminals supporting lower MSD can be minimised to 1 bit (support or not support) + X bits.

For example, if X is 2, the following are examples of terminals that do not support lower MSD and terminals that support the lower MSD.

If X=2, the following are examples of when lower MSD capability signalling is used:
i) Terminals that do not support Lower MSD:
   Terminals that do not support Lower MSD may transmit Lower MSD capability to the network. For example, the Lower MSD capability may include '[000] - not support'. Alternatively, the terminal may not transmit Lower MSD capability to the network. If the terminal does not transmit the capability, the network may determine that the terminal does not support Lower MSD capability.
ii) Terminals supporting Lower MSD:
   Terminals supporting Lower MSD may transmit the following Lower MSD capabilities to the network:
   - [100]: Supports Lower MSD, and all MSD values are less than 30 dB.
   - [101]: Supports Lower MSD, and all MSD values are less than 20 dB.
   - [110]: Supports Lower MSD, and all MSD values are less than 10 dB.
   - [111]: Supports Lower MSD, and all MSD values are less than 0 dB.

The Lower MSD value can be an absolute value. The UE applying the Lower MSD value means that, for a specific combination of bands, the Lower MSD value is used instead of the existing MSD value.

The UE can also perform the MSD reporting procedure based on the network's request.

Currently, MSD information for band combinations that support carrier aggregation (CA) or dual connectivity (DC) is defined in TS38.101-1 and TS38.101-3 V17.7.0.

MSD is defined by band combination, power class (PC), MSD interference type (e.g., harmonic, harmonic mixing, cross-band isolation and intermodulation), and victim band.

As explained in the example above, the information about the improved MSD transmitted by the UE can be minimized. If the UE does not minimize the information related the improved MSD and transmits all the information related to the improved MSD to the network, it can cause a significant signaling overhead for the UE. For example, when the UE reports information related an improved MSD (e.g., lower MSD or improved MSD value based on lower MSD, etc.) to the network, the UE may need to report various information. For example, the network needs to know the band to which the lower MSD value applies and information about the MSD type. Accordingly, when the UE reports lower MSD to the network, it may need to report various information, such as the lower MSD value, MSD type, and band combination. Transmitting a lot of information can cause a significant signaling overhead. To improve this, the procedure for a UE supporting lower MSD to report lower MSD characteristics (or capabilities) to the network based on a network request is described.

An example of the procedure for the UE to report Lower MSD based on a network request is as follows:
- To check whether there are candidates that can support lower MSD in the band combination candidates for the network to perform CA/DC, the network can send a request to the UE.

Alternatively, the terminal can be pre-equipped with the capability to support lower MSD, and this capability can be defined as 1-bit signalling (e.g., 0: no support, 1: support) if there is at least one band combination that supports lower MSD, regardless of the band combination. (The network can request information about the improved lower MSD for the terminal only.)
- A network (e.g., a base station) may transmit information about candidates for band combinations (e.g., candidates for band combinations to be used for CA or candidates for band combinations to be used for DC) to the UE. The UE can support lower MSD for the band combination candidates requested from the network. In this case, the UE may report improved MSD information for the corresponding band combination to the network. The information transmitted by the UE can be an improved MSD value, delta, or threshold. For example, the improved MSD value may mean the actual MSD value (e.g., an improved MSD value over the conventionally defined MSD value) held by the UE. The delta value can be the difference in MSD values, which indicates how much the actual MSD value of the UE has improved compared to the conventionally defined MSD value. The threshold value may be a value to indicate that the MSD value of the UE is below a certain value. For example, if the threshold value is 20 dB, it can indicate that the UE has an MSD value of 20 dB or less. The lower MSD values described in various examples of the present disclosure may be expressed in the form of thresholds. For example, the information related to the lower MSD reported by the UE to the network may include various MSD values related to the band combination, power class MSD interference type (harmonic, harmonic mixing, cross-band isolation and intermodulation), and victim band. For example, the UE can transmit to the network not only the lower MSD value but also information such as the band combination and MSD type associated with the lower MSD. The network can then determine how to use the lower MSD value.
- For the band combination candidates requested by the network, the UE may not support an improved MSD value. In this case, the UE can report to the network that it does not support a lower MSD.
- The network may perform scheduling for CA/DC for the UE based on the information received from the UE. For example, if the network receives information that the UE does not support lower MSD, the network can perform CA/DA scheduling for the UE in the same way as in the prior art.
- This method can be used in NR-CA, EN-DC, NE-DC and NR-DC for CA/DC.

If the UE signals lower MSD information without a request from the network, it may not be possible to signal all the improved MSD information. On the other hand, if the lower MSD reporting procedure based on network fairing is used, the UE can minimize signaling overhead. The UE can also report as much information as possible for the network to utilize.

In addition, the following explanations may also apply to the various examples in the present disclosure. The UE may also report the MSD class for each MSD type of the highest power class supported by the UE. For example, the MSD type may include harmonic, harmonic mixing, etc. The MSD type may also vary depending on the configuration of the UL. The MSD class can refer to a lower MSD value. For example, the MSD class can refer to a lower MSD value based on the MSD type, power class, etc.

If requested by the network and/or the regulator, the UE may also report to the network information related to the lower MSD for a power class other than the highest power class supported by the UE. The conformance test for the UE may be performed only for the highest power class supported by the UE. For example, for a UE that supports a low MSD, conformance testing based on the lower MSD value can be performed. In other words, for a UE that supports a lower MSD, conformance testing based on the previously defined MSD value does not need to be performed, and only conformance testing based on the lower MSD value can be performed. For the lower power class among the power classes supported by the UE, the reported lower MSD does not need to be tested.

The following drawings are provided to illustrate specific examples of the present disclosure. The names of specific devices or specific signals/messages/fields shown in the drawings are provided as examples, and the technical features of the present disclosure are not limited to the specific names used in the following drawings.

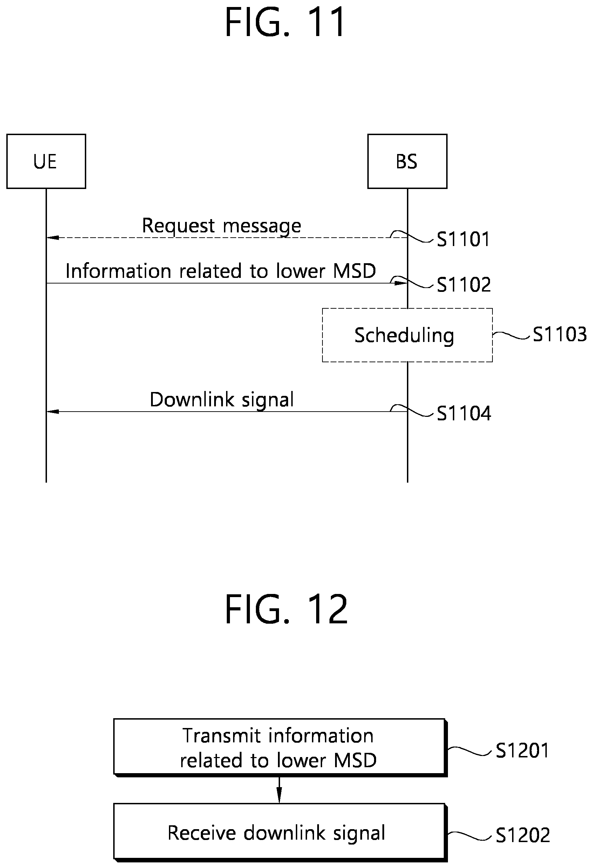

**FIG. 11** **shows an example of the procedure according to the example of the present disclosure.**

For example, the operations described in the examples of FIGS. 1 to 10 may also be applied to the example of FIG. 11. For example, even if the operations and contents not directly described in the example of FIG. 11, the actions and contents described in the various examples of the present disclosure may be applied.

The UE may include one or more transceivers; one or more processors; and one or more memories that can store instructions and be connected to operate with one or more of the processors. Based on the execution of the instructions by the one or more processors, the operations described below can be performed.

In step S1101, the base station may transmit a request message to the UE. For example, the base station may transmit a request message for requesting lower MSD information to the UE. Or, the base station may transmit a request message for requesting whether there is a candidate among the candidates for the band combination for the CA or DC for which the lower MSD is supported to the UE.

The step S1101 may also be performed selectively. For example, step S1101 may be omitted. For example, in FIG. 11, it is shown that the UE performs step S1102 after step S1101 is performed, but this is only an example. Even if step S1101 is not performed, the UE may perform step S1102.

In step S1102, the UE may transmit information related to the lower MSD to the base station. In step S1102, the UE may transmit information related to the lower MSD to the base station, as described in the various examples referenced earlier.

For example, the UE may transmit information related to whether the UE supports lower MSD. For example, the UE may also transmit information related to the lower MSD value supported by the UE. For example, the UE may report the MSD class for each MSD type of the highest power class supported by the UE. For example, the MSD type may include Harmonic, harmonic mixing, etc. The MSD type may also vary depending on the configuration of the UL. The MSD class may refer to a lower MSD value. For example, the MSD class may refer to a lower MSD value based on the MSD type, power class, etc.

In step S1103, the base station may perform scheduling based on information related to the lower MSD received from the UE. For example, the base station may change the scheduling depending on whether the UE supports the lower MSD.

For example, the following example can be applied based on the perspective of network coverage. There may be UE 1 that does not support lower MSD, and UE2 with a lower MSD value of 10 dB. The conventional MSD used by UE1 and UE 2 is assumed to be 30 dB. A network applying this assumption can assume that the MSD of UE1 is 30 dB and the MSD of UE2 is 10 dB. In this case, the SNR margin of UE2 can be considered to be 20 dB greater than that of UE 1. Accordingly, UE2 can support CA/DC operation even at distances with higher path loss.

In step S1104, the UE may receive a downlink signal.

For example, if the UE does not support lower MSD, the transceiver of the UE may be in a state configured to satisfy the requirements related to conventional MSD. The UE may receive a downlink signal through such a transceiver.

For example, if the UE supports lower MSD, the transceiver of the UE can be configured to satisfy the requirements related to MSD with the lower MSD applied to the conventional MSD. The UE can receive the downlink signal through such a transceiver. The UE with the lower MSD can use a lower value than the conventionally defined MSD. In other words, such UE can apply enhanced reference sensitivity compared to the reference sensitivity defined in the past. Also, the network may not know the unique lower MSD value of the UE. Accordingly, the UE can perform signalling operation to report lower MSD information to the network.

For example, the UE may receive configuration related to CA or DC from the base station. Based on one or more bands used for transmission of the uplink signal and one or more bands used for reception of the downlink signal, the reference sensitivity for downlink reception may be relaxed by an amount equal to the MSD based on the lower MSD.

The following drawings are provided to illustrate specific examples of the present disclosure. The names of specific devices or specific signals/messages/fields shown in the drawings are provided as examples, and the technical features of the present disclosure are not limited to the specific names used in the following drawings.

**FIG. 12** **shows an example of UE operation according to the start of the present disclosure.**

For example, with respect to the example of FIG. 12, the operations described in the examples of FIGS. 1 to 11 may also be applied. For example, even if the operations or contents are not directly described in the example of FIG. 12, the operations or contents described in the various examples of the present disclosure may be applied.

The UE may include one or more transceivers; one or more processors; and one or more memories that can store instructions and be connected to operate with one or more of the processors. Based on the execution of the instructions by the one or more processors, the operations described below can be performed.

In step S1201, the UE may transmit information related to the lower MSD to the base station. For reference, step (S1201) may also be performed in the same manner as step S1102 in FIG. 11. Information related to lower MSD may also include capability information on whether the UE supports lower MSD. Information related to lower MSD may also include an improved MSD value based on lower MSD, based on the UE's support for lower MSD. Information related to lower MSD may include information on the MSD class for the highest power class supported by the UE, for the band combination set to the UE.

The UE may also receive a request message for requesting whether there is a candidate band in the combination of the operating bands set for the UE in which the lower MSD is supported by the UE from the base station. Step S1201 may be performed after the UE has received the request message.

In response to the request message, the UE may transmit to the base station information on at least one candidate band for which lower MSD is supported by the UE.

The base station may perform scheduling for the UE based on the information related to lower MSD.

In step S1202, the UE can receive a downlink signal from the base station. For reference, step S1202 can also be performed in the same manner as step S1104 in FIG. 11. The reference sensitivity for downlink reception can be relaxed based on whether lower MSD is supported or not and the MSD.

For reference, the UE may also perform the RACH procedure described in the examples of FIGS. 9a to 9e. The UE may perform the RACH procedure before performing the operation according to FIGS. 11 or 12. Alternatively, the UE may perform the RACH procedure after performing the operation according to FIGS. 11 or 12.

The present disclosure can have various effects.

For example, efficient communication can be achieved by utilising a lower MSD depending on the capabilities of the UE. For example, signalling overhead can be reduced. For example, the network may efficiently schedule resources based on the performance of the UE.

According to various examples in the present disclosure, information related to the lower MSD possessed by the UE can be efficiently reported to the network. When the UE attempts to report lower MSD to the network, the information to be reported may be very large. According to various examples in the present disclosure, the UE may report the information related to lower MSD in a simplified manner. Alternatively, the network may request the UE to filter out only the necessary information. Then, the UE can report lower MSD-related information only for the filtered requirements. The signalling overhead can be reduced according to the various examples in the present disclosure.

The effects that can be obtained through specific examples in the present disclosure are not limited to the effects listed above. For example, there may be various technical effects that a person having ordinary skill in the related art can understand or derive from the present disclosure. Accordingly, the specific effects of this specification are not limited to those explicitly described herein, and may include various effects that can be understood or derived from the technical features of this specification.

For reference, the operation of the terminal (e.g., UE) described in the present disclosure of the present specification may be implemented by the devices of FIGS. 1 to 3 described above. For example, the terminal (e.g., UE) may be the first device 100 or the second device 200 of FIG. 1. For example, the operation of a terminal (e.g., UE) described in the present disclosure of the present specification may be processed by one or more processors 102 or 202. The operation of the terminal described in the present disclosure of the present specification may be stored in one or more memories 104 or 204 in the form of an instruction/program (e.g., instruction and executable code) executable by the one or more processors 102 or 202. The one or more processors 102 or 202 may control the one or more memories 104 or 204 and one or more transceivers 105 or 206 and execute instructions/programs stored in the one or more memories 104 or 204 to perform the operation of a terminal (e.g., UE) described in the present disclosure of the present specification.

In addition, instructions for performing the operation of the terminal (e.g., UE) described in the present disclosure of the present specification may be stored in a non-volatile computer-readable storage medium. The storage medium may be included in the one or more memories 104 or 204. In addition, the instructions recorded in the storage medium may be executed by the one or more processors 102 or 202 to perform the operation of a terminal (e.g., UE) described in the present disclosure of the present specification.

For reference, the operations of network node (e.g. AMF, SMF, UPF, PCF, AUSF, etc.) or base station (e.g. NG-RAN, gNB, eNB, etc.) described in the present disclosure of the present specification may be implemented by the devices of FIGS. 1 to 3 which will be described below. For example, the network node or the base station may be the first device 100a or the second device 100b of FIG. 1. For example, the operation of the network node or the base station described in the present disclosure of the present specification may be processed by one or more processors 102 or 202. The operation of the network node or the base station described in the present disclosure of the present specification may be stored in one or more memories 104 or 204 in the form of an instruction/program (e.g., instruction and executable code) executable by the one or more processors 102 or 202. The one or more processors 102 or 202 may control the one or more memories 104 or 204 and one or more transceivers 106 or 206 and execute instructions/programs stored in the one or more memories 104 or 204 to perform the operation of the network node or the base station described in the present disclosure of the present specification.

In addition, the instructions for performing the operation of the NTN network described in the present disclosure of the present specification may be stored in a non-volatile (or non-transitory) computer-readable storage medium. The storage medium may be included in the one or more memories 104 or 204. In addition, the instructions recorded in the storage medium may be executed by the one or more processors 102 or 202 to perform the operation of the NTN network described in the present disclosure of the present specification.

Although preferred embodiments have been described above, the present disclosure of the present specification is not limited to such specific embodiments and thus can be modified, changed, or improved in various manners within the spirt of the present disclosure of the present specification and the scope of the clams.

Although methods are described as a series of steps or blocks based on a flowchart in the exemplary system described above, they are not limited to the order of the described steps, and some steps may occur in a different order or simultaneously with other steps as described above. In addition, those skilled in the art will understand that the steps shown in the flowchart are not exclusive, and that other steps may be included or that one or more steps of a flowchart may be deleted without affecting the scope of rights.

The claims described herein may be combined in various ways. For example, the technical features of the method claims of the present disclosure of the present specification may be combined and implemented as an apparatus, and the technical features of the apparatus claims of the present disclosure of the present specification may be combined and implemented as a method. In addition, the technical features of the method claims of the present disclosure of the present specification and the technical features of the apparatus claims may be combined and implemented as an apparatus, and the technical features of the method claims of the present disclosure and the technical features of the apparatus claims may be combined and implemented as a method. Other implementations are within the scope of the following claims.

## Claims

1. A user equipment (UE) configured to operate in a wireless communication system, the UE comprising:
one or more transceivers;
one or more processors; and
at least one computer memory operably connectable to the at least one processor and storing instructions that, based on being executed by the at least one processor, perform operations comprising:
transmitting random access preamble to the base station;
receiving a response in response to the random access preamble from the base station;
transmitting information related to lower Maximum Sensitivity Degradation (MSD) to the base station;
receiving a downlink signal,
wherein the reference sensitivity for receiving the downlink signal is relaxed based on whether the lower MSD is supported or not and the MSD; and
transmitting an uplink signal.

2. The UE of claim 1, wherein the operations further comprising:
receiving a request message requesting whether there is a band candidate in which the lower MSD is supported by the UE, among candidates of a combination of operation band configured for the UE, from the base station.

3. The UE of claim 2, wherein the operations further comprising:
in response to the request message, transmitting information related to at least one candidate band in which the lower MSD is supported by the UE, to the base station.

4. The UE of claim 1,
wherein the information related to the lower MSD includes capability information related to whether the UE supports the lower MSD or not.

5. The UE of claim 1,
based on that the UE supports the lower MSD, the information related to the lower MSD includes an improved MSD value based on the lower MSD.

6. The UE of claim 1,
wherein the information related to the lower MSD is used by the base station for scheduling for the UE.

7. The UE of claim 1,
wherein the lower MSD is smaller than specified MSD value based on a band configured for the UE.

8. The UE of claim 1,
wherein the information related to the lower MSD includes, information related to MSD class for the highest power class supported by the UE, for band combination configured for the UE.

9. A method for performing communication, the method performed by a User Equipment (UE) and comprising:
transmitting random access preamble to the base station;
receiving a response in response to the random access preamble from the base station;
transmitting information related to lower Maximum Sensitivity Degradation (MSD) to the base station;
receiving a downlink signal,
wherein the reference sensitivity for receiving the downlink signal is relaxed based on whether the lower MSD is supported or not and the MSD; and
transmitting an uplink signal.

10. The method of claim 9, further comprising:
receiving a request message requesting whether there is a band candidate in which the lower MSD is supported by the UE, among candidates of a combination of operation band configured for the UE, from the base station.

11. The method of claim 9,
wherein the information related to the lower MSD includes capability information related to whether the UE supports the lower MSD or not.

12. The method of claim 9,
wherein the information related to the lower MSD includes, information related to MSD class for the highest power class supported by the UE, for band combination configured for the UE.

13. An apparatus in mobile communication comprising:
one or more processors; and
at least one computer memory operably connectable to the at least one processor and storing instructions that, based on being executed by the at least one processor, perform operations comprising:
transmitting random access preamble to the base station;
receiving a response in response to the random access preamble from the base station;
transmitting information related to lower Maximum Sensitivity Degradation (MSD) to the base station;
receiving a downlink signal,
wherein the reference sensitivity for receiving the downlink signal is relaxed based on whether the lower MSD is supported or not and the MSD; and
transmitting an uplink signal.

14. A non-transitory Computer Readable Medium (CRM) storing instructions that, based on being executed by at least one processor, perform operations comprising:
transmitting random access preamble to the base station;
receiving a response in response to the random access preamble from the base station;
transmitting information related to lower Maximum Sensitivity Degradation (MSD) to the base station;
receiving a downlink signal,
wherein the reference sensitivity for receiving the downlink signal is relaxed based on whether the lower MSD is supported or not and the MSD; and
transmitting an uplink signal.

15. A method for performing communication, the method performed by a base station and comprising:
receiving random access preamble from by a User Equipment (UE);
transmitting a response in response to the random access preamble from the base station;
receiving information related to lower Maximum Sensitivity Degradation (MSD) to the base station;
transmitting a downlink signal,
wherein the reference sensitivity for receiving the downlink signal is relaxed based on whether the lower MSD is supported or not and the MSD; and
receiving an uplink signal.

16. The method of claim 15, further comprising:
transmitting a request message requesting whether there is a band candidate in which the lower MSD is supported by the UE, among candidates of a combination of operation band configured for the UE, to the UE.

17. A base station configured to operate in a wireless communication system, the base station comprising:
one or more transceivers;
one or more processors; and
at least one computer memory operably connectable to the at least one processor and storing instructions that, based on being executed by the at least one processor, perform operations comprising:
receiving random access preamble from by a User Equipment (UE);
transmitting a response in response to the random access preamble from the base station;
receiving information related to lower Maximum Sensitivity Degradation (MSD) to the base station;
transmitting a downlink signal,
wherein the reference sensitivity for receiving the downlink signal is relaxed based on whether the lower MSD is supported or not and the MSD; and
receiving an uplink signal.
